# EUROPEAN PATENT APPLICATION

(11) **EP 2 261 480 A1**
(43) Date of publication of application: **15.12.2010**
(21) Application number: 09724242.4
(22) Date of filing: 23.03.2009
(51) Int. Cl.: F01N 7/00

(54) **ENGINE EXHAUST GAS DRAIN WATER FILTER**

(30) Priority: 24.03.2008 JP 2008075759
(71) Applicant: Yanmar Co., Ltd., Osaka-shi, Osaka 530-0013 (JP)
(72) Inventor: KANAI, Hideki, Osaka-shi Osaka 531-0076 (JP); MURAI, Susumu, Osaka-shi Osaka 531-0076 (JP)
(74) Representative: Jostarndt, Hans-Dieter
(86) International application number: PCT/JP2009/055616
(87) International publication number: WO 2009/119482

(57) **Abstract**

Provided is an engine exhaust gas drain water filter (20) which prevents an exhaust gas from invading a drain water filter itself and which has a function to separate oil and water. The engine exhaust gas drain water filter (20) comprises a water-sealed chamber (31), in which a drain water introducing pipe (21) in an engine exhaust gas passage and at a position near an engine (10) is deeply inserted into the water from an assumed water surface (D1), and in which a drain water introducing pipe (22) far from the engine (10) is shallowly inserted from an assumed water surface (D2). The drain water filter (20) further comprises a drain water connecting pipe (23) for guiding the overflow from the assumed water surface (D1) of the water-sealed chamber (31), into a neutralizing chamber (32). This neutralizing chamber (32) includes an oil-absorbing sheet (24) arranged at a position to confront the exit of the drain water connecting pipe (23).

## Description

### Technical Field

The present invention relates to an art for constructing an engine exhaust gas drain water filter of an engine exhaust system.

### Background Art

Conventionally, there is well known an engine exhaust system provided in an engine-driven working machine such as an engine-driven heat pump and engine generator. The engine exhaust system guides exhaust gas discharged from an engine to the outside of the engine-driven working machine. Generally, the engine exhaust system is constructed by connecting an exhaust silencer, a mist separator and the like with exhaust pipes.

In an engine exhaust system disclosed in the Japanese Patent Laid Open Gazette Hei. 7-259549, for discharging drain water generated by dew condensation of water in exhaust gas, an engine exhaust gas drain water filter is provided which neutralizes acidic constituents of the drain water, the drain water is guided from each of an exhaust gas heat exchanger, an exhaust silencer and a mist separator through a drain water introducing pipe to the engine exhaust gas drain water filter, and the exhaust gas invading through the drain water introducing pipe is water-sealed so as to be prevented from invading a neutralizing chamber and to be returned to an exhaust pipe.

In the engine exhaust system disclosed in the Japanese Patent Laid Open Gazette Hei. 7-259549, the drain water introducing pipe from a position close to the engine is opened at a position close to an assumed water surface and the drain water introducing pipe from a position far from the engine is opened at a position deep from the assumed water surface so that the exhaust gas invading a water-sealed chamber is returned to the exhaust pipe. Accordingly, though the exhaust gas can be prevented from invading the neutralizing chamber, the exhaust gas cannot be prevented from invading the water-sealed chamber and the drain water before neutralized may be pushed out.

### Disclosure of Invention

### Problems to Be Solved by the Invention

The purpose of the present invention is to provide engine exhaust gas drain water filter which prevents an exhaust gas from invading the drain water filter itself and separates oil and water.

### Means for Solving the Problems

An engine exhaust gas drain water filter according to the present invention comprises: a water-sealed chamber in which drain water introducing pipes are inserted into water through an assumed water surface from a plurality of positions in an engine exhaust gas passage so as to water-seal exhaust gas; a neutralizing chamber which is provided at the downstream of the water-sealed chamber and houses a neutralizer; and a drain chamber which is provided at the downstream of the neutralizing chamber; wherein, in the water-sealed chamber, one of the drain water connecting pipes close to the engine in the engine exhaust gas passage is deeply inserted into the water through the assumed water surface, and another one of the drain water connecting pipes far from the engine is shallowly inserted through the assumed water surface, a drain water connecting pipe is provided for guiding overflow from the assumed water surface in the water-sealed chamber to the neutralizing chamber, and an oil separation member is arranged in the neutralizing chamber at a position facing an outlet of the drain water connecting pipe.

In the engine exhaust gas drain water filter according to the present invention, preferably, the engine exhaust gas passage includes at least an exhaust gas heat exchanger which performs heat exchange between engine cooling water and exhaust gas, an exhaust silencer and a mist separator, and in the water-sealed chamber, the drain water connecting pipe from the exhaust gas heat exchanger or the exhaust silencer is deeply inserted into the water through the assumed water surface, and the drain water connecting pipe from the mist separator is shallowly inserted through the assumed water surface.

In the engine exhaust gas drain water filter according to the present invention, preferably, a drain water outlet is provided in an upper portion of the drain chamber, and the drain water is guided from the neutralizing chamber to a lower portion of the drain chamber.

In the engine exhaust gas drain water filter according to the present invention, preferably, the drain water connecting pipe between the water-sealed chamber and the neutralizing chamber comprises a member which is curved in height direction and connects upper surfaces of the water-sealed chamber and the neutralizing chamber to each other.

In an engine-driven working machine according to the present invention, preferably, the engine exhaust gas drain water filter is disposed in an engine exhaust gas passage.

### Effect of the Invention

According to the present invention, the engine exhaust gas drain water filter prevents exhaust gas from invading the drain water filter itself and separates oil and water.

### Brief Description of Drawings

[Fig. 1] It is a front view of an engine-driven heat pump according to the present invention.
[Fig. 2] It is a perspective view of an engine exhaust system according to the present invention.
[Fig. 3] It is a schematic drawing of flows of exhaust gas and drain water
[Fig. 4] It is a side view partially in section of an engine exhaust gas drain water filter according to the present invention.

### The Best Mode for Carrying out the Invention

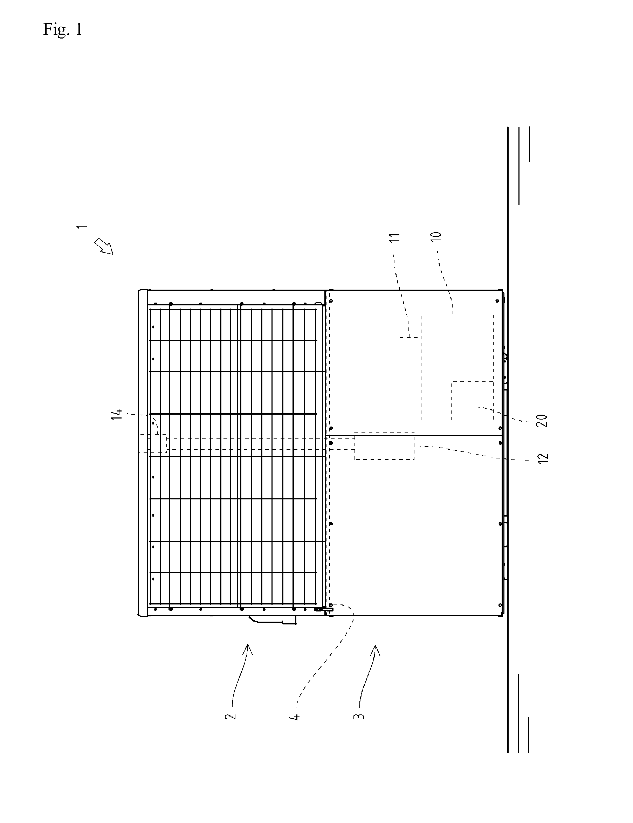

Explanation will be given on an engine-driven heat pump 1 as an engine-driven working machine referring Fig. 1.
The engine-driven heat pump 1 is divided into upper and lower sides by a partition 4, and includes a heat exchange chamber 2 at the upper side and an equipment chamber 3 at the lower side. The heat exchange chamber 2 is arranged therein with a mist separator 14. The equipment chamber 3 is arranged therein with an engine 10, an exhaust gas heat exchanger 11, an exhaust silencer 12, and an engine exhaust gas drain water filter 20. A refrigerative equipment and an engine intake system are arranged in the equipment chamber 3, but explanation thereof is omitted in this embodiment.

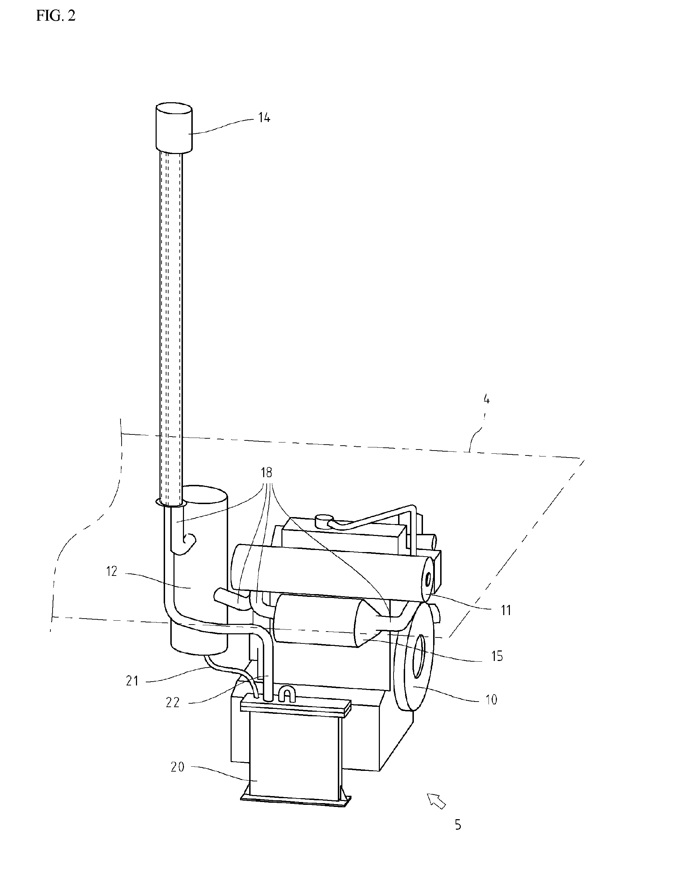

Explanation will be given on an engine exhaust system 5 referring Fig. 2. In Fig. 2, for simplifying the explanation, the partition 4 is shown with an alternate long and two short dashes line.
The engine exhaust system 5 includes an engine exhaust gas passage and a drain water passage. The engine exhaust gas passage is constructed by connecting a deodorant catalytic device 15, the exhaust gas heat exchanger 11, the exhaust silencer 12, and the mist separator 14 through exhaust pipes 18. The exhaust gas heat exchanger 11 performs heat exchange between exhaust gas and engine cooling water. The deodorant catalytic device 15 removes unburnt gas. The deodorant catalytic device 15 and the exhaust gas heat exchanger 11 are attached to the engine 10. The exhaust silencer 12 reduces exhaust noise. The mist separator 14 collects soot in the exhaust gas.

The drain water passage is constructed by connecting the mist separator 14 to the engine exhaust gas drain water filter 20 through a drain water introducing pipe 22 and connecting the exhaust silencer 12 to the engine exhaust gas drain water filter 20 through a drain water introducing pipe 21. Details of the engine exhaust gas drain water filter 20 will be described later. The drain water introducing pipe 22 is supported by the exhaust pipes 18.

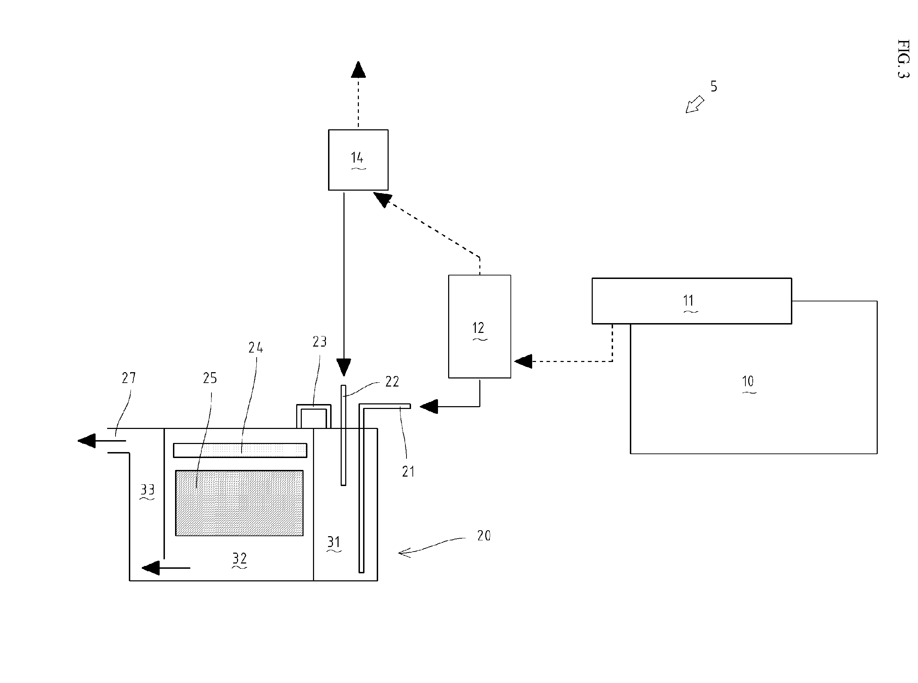

Explanation will be given on the action of the engine exhaust system 5 referring Fig. 3. In Fig. 3, an arrow of a broken line shows a flow of the exhaust gas, and an arrow of a solid line shows a flow of the drain water.
The exhaust gas is evacuated from an exhaust manifold (not shown) and discharged through the exhaust gas heat exchanger 11, the exhaust silencer 12, the exhaust pipes 18 and the mist separator 14 to the outside of the engine-driven heat pump 1. On the other hand, the drain water is separated from the exhaust gas by the exhaust silencer 12 and the mist separator 14, passes through the drain water introducing pipes 21 and 22 and the engine exhaust gas drain water filter 20, and is discharged through a drain pipe (not shown) to the outside of the engine-driven heat pump 1. Explanation of the construction is omitted that the drain water is separated from the exhaust gas in the exhaust silencer 12 and the mist separator 14.

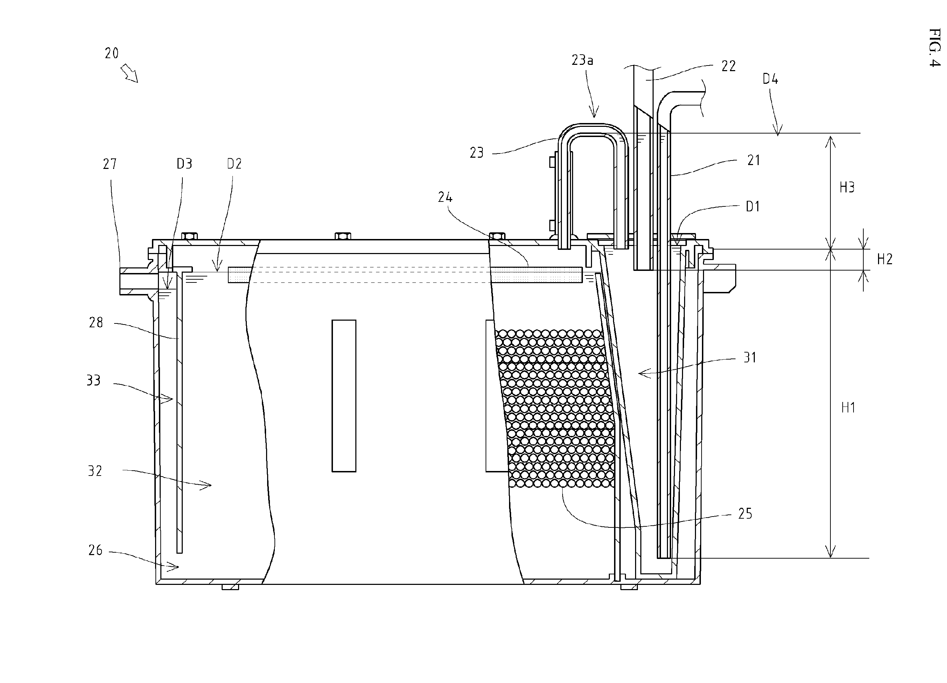

Explanation will be given on the construction of the engine exhaust gas drain water filter 20 referring Figs. 3 and 4.
The engine exhaust gas drain water filter 20 includes a water-sealed chamber 31, a neutralizing chamber 32 and a drain chamber 33. The drain water passes through the water-sealed chamber 31, the neutralizing chamber 32 and the drain chamber 33 in this order in the engine exhaust gas drain water filter 20, and then is discharged to the outside of the engine-driven heat pump 1.
The drain water introducing pipes 21 and 22 are inserted into the water-sealed chamber 31. The water-sealed chamber 31 is connected at its upper surface through a drain water connecting pipe 23 to the neutralizing chamber 32. In this case, an assumed water surface D1 of the water-sealed chamber 31 is the upper surface of the water-sealed chamber 31. Details of the assumed water surface D1 will be described later. Noteworthy, the drain water introducing pipe 21 connected to the position close to the engine 10 is inserted into the water-sealed chamber 31 from the upper surface for depth H1, and the drain water introducing pipe 22 connected to the position far from the engine 10 is inserted into the water-sealed chamber 31 from the upper surface for depth H2. H1 is deeper than H2 sufficiently.

The neutralizing chamber 32 is connected at its upper surface through the drain water connecting pipe 23 to the upper surface of the water-sealed chamber 31. The neutralizing chamber 32 is constructed with a pipe turned U-like shaped.
An oil-absorbing sheet 24 as an oil separation member is arranged in the neutralizing chamber 32 at the position facing the outlet of the drain water connecting pipe 23 and is positioned on the water surface of the drain water in the neutralizing chamber 32, that is, an assumed water surface D2 discussed later. The oil-absorbing sheet 24 contains polyethylene and the like.
Furthermore, a calcite 25 as a neutralizer is housed in the neutralizing chamber 32. The calcite 25 contains calcium carbonate and neutralizes the drain water which is acidic. The neutralizer is not especially limited to the calcite 25. The neutralizing chamber 32 is communicated with the drain chamber 33 through an opening 26 at a lower end of a partition 28. In this case, the assumed water surface D2 is the same as an assumed water surface D3 of the drain chamber 33. Details of the assumed water surfaces D2 and D3 will be described later.

A drain water outlet 27 is provided in the upper portion of the drain chamber 33. The drain water outlet 27 is communicated with the outside of the engine-driven heat pump 1 through a drain hose (not shown).

When the drain water is pooled in the engine exhaust gas drain water filter 20 sufficiently, the drain water is discharged through the drain water outlet 27. In this case, the upper limit water surface of each of the water-sealed chamber 31, the neutralizing chamber 32 and the drain chamber 33 is referred to as the assumed water surface.
The assumed water surface D3 of the drain chamber 33 has the same height as the lower end surface of the drain water outlet 27. Since the neutralizing chamber 32 is communicated with the drain chamber 33 through the opening 26, the assumed water surface D2 of the neutralizing chamber 32 has the same height as the assumed water surface D3 of the drain chamber 33.
The water-sealed chamber 31 is substantially sealed except for the drain water introducing pipes 21 and 22 and the drain water connecting pipe 23. Then, the drain water induced from the drain water introducing pipes 21 and 22 is discharged only through the drain water connecting pipe 23. Then, the assumed water surface D1 of the water-sealed chamber 31 is the upper surface of the water-sealed chamber 31.
Furthermore, an assumed water surface D4 of the drain water connecting pipe 23 has the same height as a lower end of a horizontal part 23a at which the drain water flows into the neutralizing chamber 32. In this case, the water-sealed chamber 31 is substantially sealed as mentioned above. Then, assumed water surfaces of the drain water introducing pipes 21 and 22 has the same height as the assumed water surface D4 of the drain water connecting pipe 23.

Explanation will be given on the action of the engine exhaust gas drain water filter 20 referring Figs. 3 and 4.
The drain water is guided to the water-sealed chamber 31 with the drain water introducing pipes 21 and 22, and guided to the neutralizing chamber 32 with the drain water connecting pipe 23 when the drain water overflows the assumed water surface D1 which is the upper surface of the water-sealed chamber 31. In this case, in the engine exhaust gas passage, the exhaust gas pressure becomes high as being close to the engine 10. Then, between the mist separator 14 and the exhaust silencer 12, the exhaust gas pressure is higher in the exhaust silencer 12. Namely, in the drain water introducing pipe 21, the exhaust gas is water-sealed with hydraulic pressure of depth (H1+H3). Then, the exhaust gas in the drain water introducing pipe 21 requires pressure larger than the hydraulic pressure of depth (H1+H3) for invading the water-sealed chamber 31. On the other hand, the drain water introducing pipe 22 is water-sealed with hydraulic pressure of depth (H2+H3). Then, the exhaust gas in the drain water introducing pipe 22 requires pressure larger than the hydraulic pressure of depth (H2+H3) for invading the water-sealed chamber 31. Namely, the opening of each of the drain water introducing pipes 21 and 22 is water-sealed with the hydraulic pressure higher than the pressure of the exhaust gas so that the exhaust gas is prevented from invading the engine exhaust gas drain water filter 20 itself.

The drain water is guided to the neutralizing chamber 32 with the drain water connecting pipe 23, and then guided to the drain chamber 33 with the opening 26. Since oil has smaller specific gravity than water, the oil contained in the drain water floats at the assumed water surface D2 in the neutralizing chamber 32. At this time, the oil contained in the drain water is absorbed by the oil-absorbing sheet 24 at the assumed water surface D2. Furthermore, the oil contained in the drain water is not guided to the drain chamber 33 through the opening 26 positioned at the lower end of the neutralizing chamber 32. The oil-absorbing sheet 24 is exchanged at need at the time of routine inspection of the engine-driven heat pump 1. The drain water is neutralized with the calcite 25 in the neutralizing chamber 32.

The drain water after neutralized and separated therefrom with oil is guided through the opening 26 to the drain chamber 33 and discharged the outside of the engine-driven heat pump 1 through the drain hose (not shown) connected to the drain water outlet 27.

Accordingly, the prevention of invading of exhaust gas to the drain water passage is reconciled with the improvement of oil separation ability in the drain water passage.

### Industrial Applicability

The present invention is adoptable to an engine exhaust gas drain water filter of an engine-driven working machine.

## Claims

1. An engine exhaust gas drain water filter comprising:
a water-sealed chamber in which drain water introducing pipes are inserted into water through an assumed water surface from a plurality of positions in an engine exhaust gas passage so as to water-seal exhaust gas;
a neutralizing chamber which is provided at the downstream of the water-sealed chamber
and houses a neutralizer; and
a drain chamber which is provided at the downstream of the neutralizing chamber;
wherein, in the water-sealed chamber, one of the drain water connecting pipes close to the engine in the engine exhaust gas passage is deeply inserted into the water through the assumed water surface, and another one of the drain water connecting pipes far from the engine is shallowly inserted through the assumed water surface,
a drain water connecting pipe is provided for guiding overflow from the assumed water surface in the water-sealed chamber to the neutralizing chamber, and
an oil separation member is arranged in the neutralizing chamber at a position facing an outlet of the drain water connecting pipe.

2. The engine exhaust gas drain water filter according to claim 1, wherein
the engine exhaust gas passage includes at least an exhaust gas heat exchanger which performs heat exchange between engine cooling water and exhaust gas, an exhaust silencer and a mist separator, and
in the water-sealed chamber, the drain water connecting pipe from the exhaust gas heat exchanger or the exhaust silencer is deeply inserted into the water through the assumed water surface, and the drain water connecting pipe from the mist separator is shallowly inserted through the assumed water surface.

3. The engine exhaust gas drain water filter according to claim 1, wherein
a drain water outlet is provided in an upper portion of the drain chamber, and
the drain water is guided from the neutralizing chamber to a lower portion of the drain chamber.

4. The engine exhaust gas drain water filter according to claim 1, wherein the drain water connecting pipe between the water-sealed chamber and the neutralizing chamber comprises a member which is curved in height direction and connects upper surfaces of the water-sealed chamber and the neutralizing chamber to each other.

5. An engine-driven working machine comprising the engine exhaust gas drain water filter according to one of claims 1 to 4 disposed in an engine exhaust gas passage.
